# EUROPÄISCHE PATENTANMELDUNG

(11) **EP 1 716 744 A1**
(43) Veröffentlichungstag der Anmeldung: **02.11.2006**
(21) Anmeldenummer: 06112967.2
(22) Anmeldetag: 24.04.2006
(51) Int. Cl.: A01D 89/00

(54) **Gutaufnehmer und Erntemaschine**

(30) Priorität: 29.04.2005 DE 102005020463
(71) Anmelder: Deere & Company, Moline, IL 61265-8098 (US)
(72) Erfinder: Pourchet, Jérémy, 25650, Gilley (FR); Josset, Etienne, 70100, Arc les Gray (FR)
(74) Vertreter: Löser, Iris

(57) **Zusammenfassung**

Es wird ein Gutaufnehmer (10) mit einem Zinken (14) aufweisenden Aufnehmerrotor (12) und einer ersten, die Zinken in einem oberen, vorderen und unteren Bereich umschließenden ersten Leiteinrichtung (24), welche Führungbahnen (25) zur Verfügung stellt, in denen die Zinken (14) entlang einer Kurvenbahn geführt werden, vorgeschlagen. In einem in Förderrichtung rückwärtigen Bereich ist eine weitere Leiteinrichtung (28) vorgesehen, die die Zinken (14) zumindest während bei einem Reversieren des Aufnahmerotors (12) in Richtung der Führungsbahnen (25) leitet.

## Beschreibung

Die Erfindung betrifft einen Gutaufnehmer mit einem Zinken aufweisenden Aufnehmerrotor und einer ersten, die Zinken in einem oberen, vorderen und unteren Bereich umschließenden ersten Leiteinrichtung, welche Führungsbahnen zur Verfügung stellt, in denen die Zinken entlang einer Kurvenbahn geführt werden und eine landwirtschaftliche Erntemaschine mit einem derartigen Gutaufnehmer.

Bekannte Gutaufnehmer, wie sie beispielsweise in der DE-A1-102 51 827 beschrieben werden, weisen einen Aufnehmerrotor auf, welcher mit einer Freilaufkupplung versehen ist, so dass er im Falle eines Reversierens des Gutaufnehmers nicht reversiert, da dies zu einem Verhaken der Zinken des Aufnehmerrotors führen könnte.

Das der Erfindung zu Grunde liegende Problem wird darin gesehen, dass Verstopfungen im Bereich des Aufnehmerrotors derartiger Gutaufnehmer schwierig zu beseitigen sind.

Dieses Problem wird erfindungsgemäß durch die Lehre der Patentansprüche 1 bzw. 6 gelöst, wobei in den weiteren Patentansprüchen Merkmale aufgeführt sind, welche die Lösung in vorteilhafter Weise weiterentwickeln.

Es wird ein Gutaufnehmer mit einem Zinken aufweisenden Aufnehmerrotor und einer ersten, die Zinken in einem oberen, vorderen und unteren Bereich umschließenden ersten Leiteinrichtung, welche Führungsbahnen zur Verfügung stellt, in denen die Zinken entlang einer Kurvenbahn geführt werden, vorgeschlagen. In einem in Förderrichtung rückwärtigen Bereich ist eine weitere Leiteinrichtung vorgesehen, die die Zinken zumindest bei einem Reversieren des Aufnahmerotors in Richtung der Führungsbahnen leitet. Auf diese Weise kann auch der Aufnahmerotor reversiert bzw. in einer der normalen Förderrichtung entgegensetzten Richtung bewegt werden, beispielsweise um Verstopfungen zu beseitigen oder um metallische Gegenstände oder Steine auszuwerfen, ohne dass dies zu einem Verhaken der Zinken führt. Die Leiteinrichtungen sind vorzugsweise mehrteilig ausgebildet, es ist aber auch eine einteilige Ausführung denkbar.

Weist die zweite Leiteinrichtung Führungsbahnen auf, in denen die Zinken insbesondere im Falle einer Reversierung des Aufnahmerotors geführt werden, so wird durch diese Führungsbahnen die Bewegung der Zinken im Falle einer Reversierung klar definiert.

Diese Führungsbahnen können durch Gitter oder Stäbe etc. begrenzt werden. Eine geringe Verstopfungsneigung ergibt sich aber, wenn die zweite Leiteinrichtung Führungsflächen aufweist.

Derartige Führungsflächen können beispielsweise durch Platten, insbesondere in der Art von Blechen begrenzt werden. Eine derartige Ausführungsform ist einfach und kostengünstiger. Es ist sind aber auch einteilige, tiefgezogen oder andere geeignete Ausführungsformen denkbar.

Der Eintritt der Zinken wird verbessert, wenn sich die Führungsbahnen vorzugsweise in Richtung eines oberen, geöffneten Endbereichs der Führungsbahnen der ersten Leiteinrichtung verjüngen. Auf diese Weise werden die Zinken in die Führungsbahnen der ersten Leiteinrichtung hineingeleitet. Der Eintritt in die Führungsbahn der zweiten Leiteinrichtung aus der ersten Leiteinrichtung kann in einem breiten Bereich erfolgen, wodurch wiederum einem Verhaken oder Verklemmen entgegengewirkt wird.

Derartige Gutaufnehmer können an landwirtschaftlichen Erntegeräten bzw. -maschinen, vorzugsweise in der Art von Feldhäckslern, eines Mähdreschern oder einer Ballenpressen Verwendung finden.

In der Zeichnung ist ein nachfolgend näher beschriebenes Ausführungsbeispiel der Erfindung dargestellt. Es zeigt:
- Fig. 1: einen Gutaufnehmer einer landwirtschaftlichen Erntemaschine,
- Fig. 2: eine schematische Schnittdarstellung des Gutaufnehmers mit einer ersten und einer zweiten Leiteinrichtung.

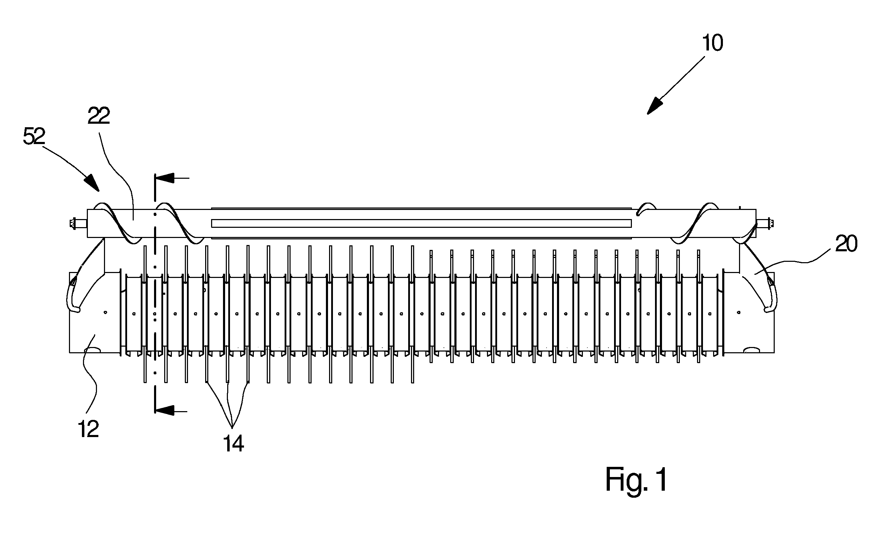

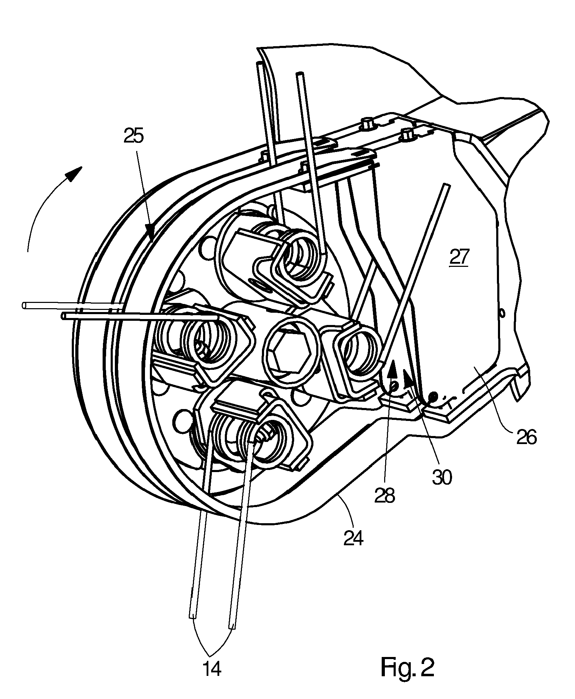

Figur 1 zeigt einen Gutaufnehmer 10 für eine landwirtschaftliche Erntemaschine, wie beispielsweise einen Feldhäcklser, einen Mähdrescher oder eine Ballenpresse, beispielsweise in der Art einer Rundballen- oder einer Großballenpresse. Der Gutaufnehmer umfasst einen Aufnehmerrotor 12 mit einer Vielzahl von an dessen Umfang befestigten Zinken 14, der das Erntegut oberschlächtig, d.h. über Kopf fördert, was durch einen entsprechenden Drehrichtungspfeil (siehe Figur 2) angedeutet ist. Die Zinken 14 sind jeweils an Federn 16 flexibel aufgehängt (vgl. Figur 2). Der Aufnehmerrotor 12 ist in einem Aufnehmerrahmen 18 drehbar gelagert und mit dessen Hilfe vorzugsweise in seiner Höhe über dem Boden einstellbar. Seitlich der beiden Enden des Aufnehmerrotors 12 des Gutaufnehmers 10 sind Leitbleche 20 vorgesehen, die verhindern sollen, dass das aufgenommene Gut seitlich vom Gutaufnehmer 10 herunter fällt und anschließend nicht mehr erfasst wird. Dem Gutaufnehmer 10 ist weiterhin ein ebenfalls am Aufnehmerrahmen drehbar gelagerter Niederhalterrotor 22 zugeordnet, der in entgegengesetzter Richtung zum Gutaufnehmer 10 rotiert. Der Niederhalterrotor 22 ist in Vorschubrichtung V schräg oberhalb des Aufnehmers angeordnet, befindet sich also stromaufwärts des Aufnehmerrotors 12.

Der vom Erntegut in Rotation versetzte bzw. aktiv angetriebene Niederhalterrotor 22 sorgt für einen zuverlässigen und gleichmäßigen Gutfluss des aufgenommenen und in Richtung einer nicht gezeigten Schneideinrichtung geförderten Gutes und verhindert weitest gehend Verstopfungen, die zu einer unerwünschten Unterbrechung der Gutförderung und damit zu Arbeitszeitverlusten führen können. Insbesondere sorgt der Niederhalterrotor 22 dafür, dass sich das Erntegut nicht in den Seitenbereichen des Gutaufnehmers 10 verfängt.

Figur 2 zeigt eine schematische Schnittdarstellung des Aufnehmerrotors, wobei nur eine Gruppe von Zinken 14 sowie die diesen Zinken 14 zugeordneten weiteren Bauteile dargestellt sind. Aus dieser Darstellung wird deutlich, dass die Zinken 14 in einem oberen, vorderen und unteren Bereich von einer Leiteinrichtung 24 umgeben werden. Diese Leiteinrichtung 24 umschließt die Zinken 14 und stellt Führungsbahnen 25 in der Art von Schlitzen zur Verfügung, in denen sich die Zinken 14 auf einer Kurvenbahn bewegen können, um im normalen Betrieb Erntegut oberschlächtig zu fördern.

In einem Bereich in Förderrichtung rückwärts des Aufnehmerrotors 12 ist an diesen bzw. an die Leiteinrichtung 24 angrenzend eine weitere Leiteinrichtung 26 vorgesehen.

Diese Leiteinrichtung 26 setzt sich gemäß dem vorliegenden Ausführungsbeispiel aus einer Mehrzahl einzelner Leitflächen 28 zusammen, die zwischen sich Führungsbahnenbahnen 30 bilden. Die Leitflächen 28 sind derart ausgerichtet, dass sich die eingeschlossenen Führungsbahnen 30 in Richtung eines oberen, geöffneten Endbereichs 32 der Führungsbahnen 26 in der ersten Leiteinrichtung 24 verengen bzw. in Richtung eines unteren, geöffneten Endbereichs 34 der Führungsbahnen 26 erweitern. Die Leitflächen 28 werden durch einzelne Platten 27, in der Art von Blechen, gebildet, welche fest oder lösbar miteinander verbunden werden können. Es ist auch denkbar, die Platten 27 an einem oder mehreren Trägern oder einem Rahmen anzubringen, beispielsweise auch indem die Platten in Schlitze in derartigen Trägern bzw. in einem Rahmen durch ein Einschlagen mit einem geeigneten Werkzeug verklemmt werden.

Gemäß dem vorliegenden Ausführungsbeispiel wird der Aufnehmerrotor 12 derart angetrieben, dass er im Bedarfsfall, d.h., beispielsweise im Falle einer Verstopfung, in einer der in Figur 2 durch den Pfeil angedeuteten Förderrichtung entgegensetzten Richtung angetrieben werden kann.

Die zweite Leiteinrichtung 26 trägt dazu bei, dass die Zinken 14 im Falle einer Reversierung geführt werden und in die Führungsbahnen 26 der ersten Leiteinrichtung 24 eintreten ohne zu verhaken.

## Patentansprüche

1. Gutaufnehmer (10) mit einem Zinken (14) aufweisenden Aufnehmerrotor (12) und einer ersten, die Zinken (14) in einem oberen, vorderen und unteren Bereich umschließenden ersten Leiteinrichtung (24), welche Führungsbahnen (25) zur Verfügung stellt, in denen die Zinken (14) entlang einer Kurvenbahn geführt werden, **dadurch gekennzeichnet, dass** in einem in Förderrichtung rückwärtigen Bereich eine weitere Leiteinrichtung (28) vorgesehen ist, die die Zinken (14) zumindest bei einem Reversieren des Aufnahmerotors (12) in Richtung der Führungsbahnen (25) leitet.

2. Gutaufnehmer nach Anspruch 1, **dadurch gekennzeichnet, dass** die zweite Leiteinrichtung (28) Führungsbahnen (30) aufweist, in denen die Zinken (14) insbesondere im Falle einer Reversierung des Aufnahmerotors (12) geführt werden.

3. Gutaufnehmer nach Anspruch 2, **dadurch gekennzeichnet, dass** die zweite Leiteinrichtung (28) Führungsflächen (28) aufweist, die vorzugsweise die Führungsbahnen (30) begrenzen.

4. Gutaufnehmer nach Anspruch 2, **dadurch gekennzeichnet, dass** die Führungsflächen (28) durch Platten (27), insbesondere durch Bleche gebildet werden.

5. Gutaufnehmer nach einem oder mehreren der Ansprüche 2 bis 4, **dadurch gekennzeichnet, dass** sich die Führungsbahnen (30) in der zweiten Leiteinrichtung (28) einenends, vorzugsweise in Richtung eines oberen, geöffneten Endbereichs der Führungsbahnen (25) der ersten Leiteinrichtung (24) verjüngt.

6. Landwirtschaftliches Erntegerät, vorzugsweise in der Art eines Feldhäckslers, eines Mähdreschers oder einer Ballenpresse, mit einem Gutaufnehmer (10) gemäß einem oder mehreren der vorherigen Ansprüche.
